# FASCICULE DE BREVET EUROPEEN

(11) **EP 2 364 195 B1**
(45) Date de publication et mention de la délivrance du brevet: **05.12.2012**
(21) Numéro de dépôt: 08875623.4
(22) Date de dépôt: 30.10.2008
(51) Int. Cl.: B01D 33/21, B01D 33/46, B01D 33/76

(54) **DISPOSITIF DE RACLAGE POUR INSTALLATION DE FILTRATION SOUS PRESSION**
ABSTREIFVORRICHTUNG FÜR EINE DRUCKFILTRATIONSANLAGE
SCRAPPING DEVICE FOR A PRESSURISED FILTRATION PLANT

(43) Date de publication de la demande: 14.09.2011
(73) Titulaire: Gaudfrin, 78100 Saint Germain en Laye (FR)
(72) Inventeur: GAUDFRIN, Guy, F-78860 Saint-Nom-la-Breteche (FR)
(74) Mandataire: Bugnion Genève
(86) Numéro de dépôt international: PCT/FR2008/001532
(87) Numéro de publication internationale: WO 2010/049599

(56) Documents cités:
- WO-A-96/38214
- WO-A-02/063095
- FR-A- 1 215 168
- US-A1- 2004 045 913

## Description

La présente invention se rapporte à un dispositif de séparation liquide/solide et plus particulièrement à un dispositif de filtration à disques sous pression.

L'art antérieur et, notamment, le FR1215168 divulgue un dispositif de filtration à disques sous pression. Ce dispositif comprend une enceinte formée d'une cuve étanche dans laquelle sont logés des disques composés de secteurs garnis d'une enveloppe en toile filtrante.

Les secteurs sont connectés à des collecteurs enfermés dans un arbre rotatif doté d'un distributeur assurant la sortie des filtrats, l'échappement de l'air d'essorage et l'entrée de l'air de soufflage destiné au décollement des gâteaux essorés.

Les disques sont disposés verticalement de telle sorte qu'au moins leur partie inférieure plonge dans des auges destinées à recevoir le liquide chargé.

Le procédé de filtration sous pression impose l'utilisation d'une enceinte étanche et robuste ainsi qu'un dispositif d'extraction des dépôts ou gâteaux essorés.

Mais, en contrepartie, il permet d'augmenter le rendement de séparation, de réaliser un meilleur essorage des gâteaux et de traiter les suspensions volatiles ou celles à température élevée.

Une application des dispositifs de ce type se trouve plus particulièrement dans le domaine de l'industrie sucrière et de l'industrie minérale.

Cependant, ces industries réclament des installations de filtration de très grandes capacités ce qui nécessite de loger des surfaces filtrantes importantes dans des enceintes de faible volume pour limiter l'encombrement. Or, la surface filtrante est proportionnelle au nombre de disques utilisés et l'optimisation du dispositif conduit donc à rapprocher les disques au maximum.

Pour une enceinte donnée, plus le nombre de disques augmente plus l'espace intercalaire entre les auges des disques, qui est nécessaire à l'évacuation des gâteaux essorés, diminue et plus les risques de bourrage sont élevés du fait, notamment, de la formation de ponts de matière solide entre les flancs des auges.

De surcroit, le bourrage peut engendrer une accumulation des gâteaux dans la zone située au-dessus des auges et donc entre les disques eux-mêmes créant ainsi une surcharge pondérale importante qui peut conduire à leur déformation voir à leur rupture.

La présente invention entend remédier à ces problèmes techniques de manière efficace et satisfaisante.

Ce but est atteint, conformément à la présente invention, au moyen d'un dispositif dans lequel les disques sont disposés verticalement de telle sorte que leur partie inférieure plonge dans des auges recouvertes par des déflecteurs et comportant des moyens de raclage des dépôts de matière solide sur leurs parois extérieures.

Selon une caractéristique avantageuse, lesdits moyens de raclage comprennent des lames pivotantes montées sur un axe horizontal de support disposé sous les auges et doté d'une bielle dont l'extrémité est reliée à un vérin de commande.

Selon une autre caractéristique, lesdites lames sont portées par une embase cylindrique munie d'un jeu de deux ergots de calage et destinée à être fixée dans des manchons tubulaires traversant l'axe.

De préférence, lesdits ergots sont engagés dans des encoches ménagées dans l'extrémité externe des manchons tubulaires.

Selon une variante avantageuse, lesdites lames sont solidarisées par paire de façon à agir sur les parois en regard de deux auges adjacentes.

Il est prévu que ledit axe de support soit disposé sous les auges dans une zone située hors du passage des gâteaux.

Selon une autre variante, ledit vérin est pneumatique et imprime aux lames, via une bielle, un mouvement de va et vient le long des parois extérieures des auges.

Le dispositif de l'invention permet d'assurer une capacité de filtration importante et performante dans une enceinte de volume restreint.

Les risques de formation de ponts et de bourrages sont supprimés par l'action des lames de raclage dont le mouvement alternatif élimine en permanence les dépôts de matière solide le long des parois des auges dès leur apparition.

En outre, la maintenance des moyens de raclage est aisée du fait que les lames sont retenues sur l'axe de support par leur propre poids. Ainsi, leur montage et leur remplacement occasionnel est-il très rapide.

L'invention sera mieux comprise à la lecture de la description, faite ci-après à titre purement explicatif, d'un mode de réalisation de l'invention, en référence aux figures annexées sur lesquelles:
- La figure 1 représente une vue latérale d'un mode de réalisation du dispositif de l'invention,
- la figure 2 représente une vue de dessus du dispositif de la figure 1,
- la figure 3 représente une vue de détail agrandie et de dessus du dispositif de la figure 1.

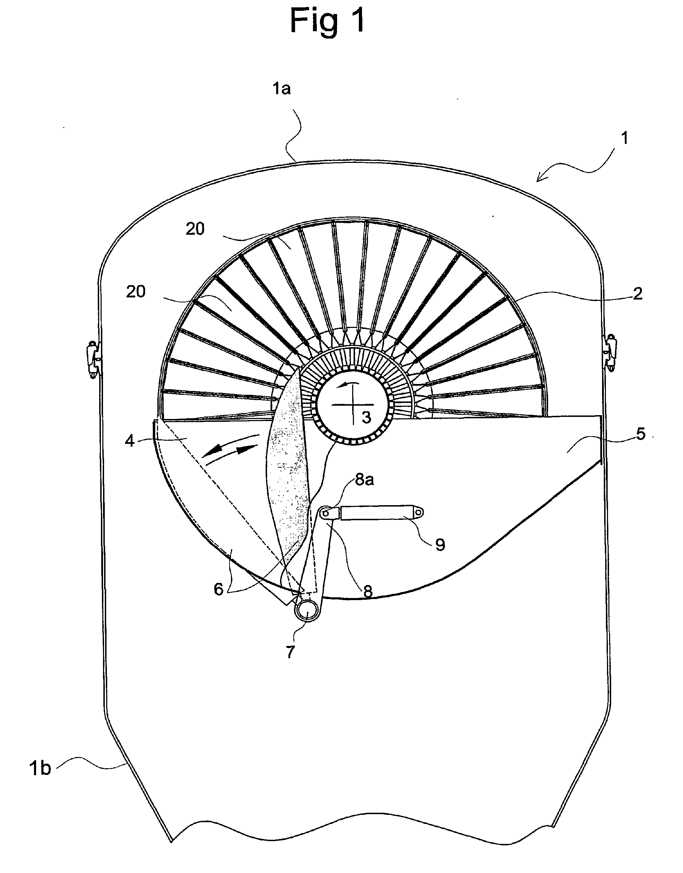

Le dispositif de filtration représenté sur la figure 1 comprend une enceinte extérieure formée ici d'une cuve verticale 1 dont la structure cylindro-conique est étanche et renforcée pour résister à des pressions internes de l'ordre de 10 bars.

Le dispositif comprend au moins une conduite d'arrivée de liquide chargé en particules solides et au moins une conduite de sortie du filtrat (non représentées).

La partie inférieure de la cuve 1 est constituée par une trémie conique 1b recevant les gâteaux essorés avant leur extraction.

La partie supérieure comporte un dôme la formant le couvercle de la cuve 1. Le dôme 1a est susceptible d'être dégagé pour libérer un accès permettant des interventions sur les éléments internes.

La cuve 1 renferme une série de disques filtrants 2 disposés verticalement et parallèlement entre eux.

Les disques 2 sont montés sur un arbre rotatif 3 s'étendant horizontalement dans la cuve 1.

La structure des disques est traditionnelle et est constituée de secteurs 20 délimités par une ossature métallique, chaque secteur étant garni d'une enveloppe en toile filtrante et étant raccordé radialement à une conduite ménagée à l'intérieur de l'arbre 3.

Les disques 2 sont disposés verticalement dans la cuve 1 de telle sorte qu'au moins leur partie inférieure plonge dans des auges 4 contenant un bain de liquide chargé en matières solides.

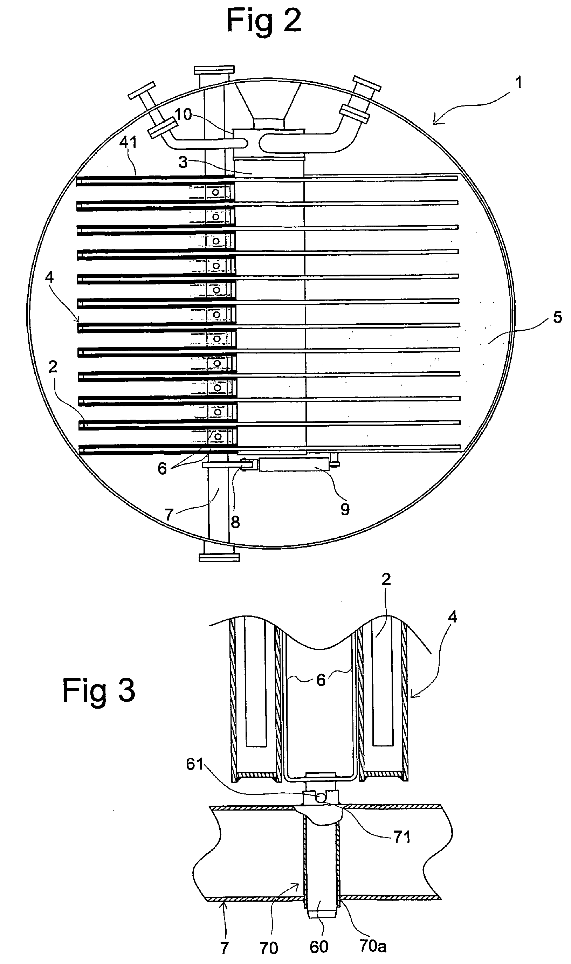

Les auges 4 présentent des parois latérales verticales 41 qui bordent chaque disque et qui l'isolent du disque adjacent, comme représenté en vue partielle sur la figure 3.

Le bord supérieur des parois des auges 4 est surmonté par un déflecteur 41, sans contact avec le flanc des disques 2, qui recouvre et obture partiellement le compartiment intérieur de chaque auge.

Les auges 4, qui sont situées du côté du déchargement des gâteaux, communiquent avec un bac unique 5 situé de l'autre côté comme représenté sur la figure 2 et qui reçoit le liquide chargé appelé aussi suspension ou encore « bouillie ».

Du fait du différentiel de pression existant entre l'intérieur de la cuve 1 et donc des auges 4 et du bac 5, d'une part, et le volume interne des secteurs 20 des disques 2 en rotation, d'autre part, le liquide présent dans la suspension, appelé aussi filtrat, est poussé au travers de la toile des secteurs immergés tandis que la matière solide séparée forme un gâteau qui reste appliqué sur les flancs des disques lorsque les secteurs 2 sortent du bac 5.

L'établissement, au moyen du distributeur 10, d'une contre-pression à l'intérieur des secteurs se trouvant, lors de leur rotation, au-dessus des déflecteurs 41 et avant que ces secteurs ne replongent dans la suspension, permet de décoller les gâteaux qui sont dirigés par les déflecteurs 41 dans l'espace compris entre les auges 4.

C'est alors qu'il est nécessaire de s'assurer que, dans leur chute, les gâteaux n'adhèrent pas aux parois des auges 4 et ne puissent créer des ponts à l'origine des bourrages.

A cet effet, le dispositif de l'invention comporte des moyens permettant de racler les dépôts dès leur formation sur les parois des auges 4.

Ces moyens de raclage comprennent des lames pivotantes verticales 6 dirigées vers le haut le long des parois des auges 4 et montées sur un axe horizontal de support 7.

L'axe 7 est disposé sous les auges 4 hors de l'espace réservé à la chute des gâteaux et est doté d'une bielle 8 articulée à un vérin 9 de commande.

Le vérin 9 est, de préférence, un vérin pneumatique qui peut être alimenté par l'air en surpression présent dans l'enceinte.

Les lames 6 balaient l'espace compris entre deux auges 4 et sont reliées entre elles à leur extrémité inférieure et fixées à une embase cylindrique 60 muni d'un jeu de deux ergots 61.

L'embase 60 est engagée par coulissement dans un manchon tubulaire 70 traversant l'axe 7 auquel il est soudé comme représenté sur la figure 3.

Dans cette configuration, les lames 6 sont retenues en place par leur propre poids et calées en position par les ergots 61 venues s'emboiter dans des encoches ménagées dans le tube 70.

Les lames 6 sont solidarisées par paire de façon à agir sur les parois en regard de deux auges 4 adjacentes, comme représentées sur la figure 3.

De préférence, chaque paire de lames 6 est réalisée d'une seule pièce par façonnage en U d'une lame continue pourvue de bords biseautés de part et d'autre.

Les lames 6 viennent ainsi araser, à la manière d'un couteau, tout dépôt éventuel adhérant aux parois des auges et préviennent la formation de ponts d'autant plus probable que l'espace entre les parois est faible.

## Revendications

1. Dispositif de filtration sous pression comprenant ; une cuve étanche (1) dans laquelle sont logés des disques (2) composés de secteurs filtrant (20) portés par un arbre rotatif (3) et raccordés à des collecteurs logés à l'intérieur dudit arbre, un distributeur (10) assurant la sortie des filtrats, l'échappement de l'air d'essorage et l'entrée de l'air de soufflage destiné au décollement des gâteaux essorés, au moins une conduite d'arrivée de liquide chargé en particule solides, au moins une conduite de sortie des filtrats et une trémie (1b) de récupération des particules solides, **caractérisé en ce que** les disques (2) sont disposés verticalement de telle sorte que leur partie inférieure plonge dans des auges (4) recouvertes par des déflecteurs (41) et comportant des moyens de raclage des dépôts de matière solide sur leurs parois extérieures.

2. Dispositif de filtration selon la revendication 1 **caractérisé en ce que** lesdits moyens de raclage comprennent des lames pivotantes (6) montées sur un axe horizontal (7) de support disposé sous les auges et doté d'une bielle (8) dont l'extrémité est reliée à un vérin de commande (9).

3. Dispositif de filtration selon la revendication 2, **caractérisé en ce que** les dites lames (6) sont portées par une embase cylindrique (60) munie d'un jeu de deux ergots (61) de calage et destinée à être fixée dans des manchons tubulaires (70) traversant l'axe (7).

4. Dispositif de filtration selon l'une des revendications 2 ou 3, **caractérisé en ce que** les dites lames (6) sont solidarisées par paire de façon à agir sur les parois en regard de deux auges (4) adjacentes.

5. Dispositif de filtration selon l'une des revendications 3 ou 4, **caractérisé en ce que** lesdits ergots (61) sont engagés dans des encoches ménagées dans l'extrémité externe des manchons tubulaires (70).

6. Dispositif de filtration selon l'une des revendications 2 à 5 **caractérisé en ce que** ledit axe de support (7) est disposé sous les auges (4) dans une zone située hors du passage des gâteaux.

7. Dispositif de filtration selon l'une des revendications 2 à 6 **caractérisé en ce que** ledit vérin (9) est pneumatique et imprime aux lames (6), via une bielle (8), un mouvement de va et vient le long des parois extérieures des auges (4).

## Claims

1. A pressurized filtration device comprising: an airtight vessel (1) housing disks (2) made up of filter sectors (20) carried by a rotary shaft (3) and coupled to collectors housed inside said shaft, a distributor (10) for letting out the filtrate, venting the deliquoring air and admitting the blowing air intended for detaching the deliquored cake, at least one inlet pipe for liquid laden with solid particles, at least one outlet pipe for the filtrate and a hopper (1b) for collecting the solid particles, **characterized in that** the disks (2) are arranged vertically so that their lower part is immersed in troughs (4) covered by deflectors (41) and comprising means of scraping deposits of solid matter off their exterior walls.

2. The filtration device as claimed in claim 1, **characterized in that** said scraper means comprise pivoting doctor blades (6) mounted on a horizontal support spindle (7) positioned under the troughs and provided with a link rod (8) the end of which is connected to a control actuator (9).

3. The filtration device as claimed in claim 2, **characterized in that** said doctor blades (6) are borne by a cylindrical mount (60) equipped with a set of two setting pins (61) and intended to be fixed into tubular sleeves (70) that pass through the spindle (7).

4. The filtration device as claimed in one of claims 2 and 3, **characterized in that** said doctor blades (6) are secured in pairs so that they act on the facing walls of two adjacent troughs (4).

5. The filtration device as claimed in one of claims 3 and 4, **characterized in that** said pins (61) are engaged in notches formed in the outer end of the tubular sleeves (70).

6. The filtration device as claimed in one of claims 2 to 5, **characterized in that** said support spindle (7) is positioned under the troughs (4) in a region not in the path of the cakes.

7. The filtration device as claimed in one of claims 2 to 6, **characterized in that** said actuator (9) is a pneumatic actuator and via a link rod (8) causes the doctor blades (6) to move back and forth along the exterior walls of the troughs (4).

## Patentansprüche

1. Filtrationsvorrichtung unter Druck, die einen dichten Behälter (1), in dem aus filtrierenden Sektoren (20) zusammengesetzte Scheiben (2) untergebracht sind, die von einer rotierenden Welle (3) getragen werden und mit in der Welle untergebrachten Sammlern verbunden sind, einen Verteiler (10), der den Ausgang der Filtrate, die Ableitung der Schleuderluft und den Eingang der Blasluft, die zur Abtrennung der getrockneten Kuchen bestimmt ist, sicherstellt, mindestens eine Leitung zur Einleitung von Flüssigkeit, die mit festen Partikeln beschickt ist, mindestens eine Filtratausgangsleitung und einen Trichter (1b) zum Auffangen der festen Partikel umfasst, **dadurch gekennzeichnet, dass** die Scheiben (2) vertikal derart angeordnet sind, dass ihr unterer Abschnitt in Schalen (4) eintaucht, die von Ablenkern (41) bedeckt sind und Abschabmittel für feste Materialablagerungen auf ihren Außenwänden aufweisen.

2. Filtrationsvorrichtung nach Anspruch 1, **dadurch gekennzeichnet, dass** die Abschabmittel drehende Lamellen (6) umfassen, die auf einer horizontalen (7) Stützachse montiert sind, die unter den Schalen angeordnet und mit einem Pleuel (8) ausgestattet ist, dessen Ende mit einem Steuerzylinder (9) verbunden ist.

3. Filtrationsvorrichtung nach Anspruch 2, **dadurch gekennzeichnet, dass** die Lamellen (6) von einer zylindrischen Basis (60) getragen werden, die mit einem Satz aus zwei Verkeilungsnasen (61) ausgestattet ist und dazu bestimmt ist, in rohrförmigen Hülsen (70) befestigt zu sein, die die Achse (7) durchqueren.

4. Filtrationsvorrichtung nach einem der Ansprüche 2 oder 3, **dadurch gekennzeichnet, dass** die Lamellen (6) derart paarweise verbunden sind, dass sie auf die Gegenüberwände zweier benachbarten Schalen (4) einwirken.

5. Filtrationsvorrichtung nach einem der Ansprüche 3 oder 4, **dadurch gekennzeichnet, dass** die Verkeilungsnasen (61) in Kerben eingreifen, die in das äußere Ende der rohrförmigen Hülsen (70) eingearbeitet sind.

6. Filtrationsvorrichtung nach einem der Ansprüche 2 bis 5, **dadurch gekennzeichnet, dass** die Stützachse (7) unter den Schalen (4) in einem Bereich außerhalb der Passage der Kuchen angeordnet ist.

7. Filtrationsvorrichtung nach einem der Ansprüche 2 bis 6, **dadurch gekennzeichnet, dass** der Zylinder (9) pneumatisch ist und die Lamellen (6) über einen Pleuel (8) in eine Hin- und Herbewegung entlang der Außenwände der Schalen (4) versetzt.
